# FASCICULE DE BREVET EUROPEEN

(11) **EP 1 530 423 B1**
(45) Date de publication et mention de la délivrance du brevet: **13.08.2008**
(21) Numéro de dépôt: 03750864.5
(22) Date de dépôt: 30.07.2003
(51) Int. Cl.: A21D 2/26, A21D 10/00, A21D 13/08

(54) **BASE ALIMENTAIRE POUR BEIGNETS, SON PROCEDE DE PREPARATION ET SES UTILISATIONS**
AUSGANGSMATERIAL FÜR KRAPFEN, VERFAHREN ZU DESSEN HERSTELLUNG UND SEINE VERWENDUNGEN
FOOD BASE FOR FRITTERS, METHOD FOR THE PRODUCTION THEREOF, AND USES THEREOF

(30) Priorité: 31.07.2002 FR 0209735
(43) Date de publication de la demande: 18.05.2005
(73) Titulaire: AGRO FOOD DEVELOPPEMENT, 56800 Plormel (FR)
(72) Inventeur: CREPIN, Lionel, F-10130 Montigny les Monts (FR); SCHLIENGER, François, F-56800 Plo¬rmel (FR)
(74) Mandataire: Goulard, Sophie
(86) Numéro de dépôt international: PCT/FR2003/002408
(87) Numéro de publication internationale: WO 2004/012513

(56) Documents cités:
- WO-A-01/67870
- GB-A- 2 195 225
- US-A- 3 481 745
- SUHAILA MOHAMED ET AL: "EFFECT OF PROTEIN FROM DIFFERENT SOURCES ON THE CHARACTERISTICS OF SPONGE CAKES, RICE CAKES (APAM), DOUGHUTS AND FRYING BATTERS" JOURNAL OF THE SCIENCE OF FOOD AND AGRICULTURE, ELSEVIER APPLIED SCIENCE PUBLISHERS. BARKING, GB, vol. 68, no. 3, 1 juillet 1995 (1995-07-01), pages 271-277, XP000511660 ISSN: 0022-5142

## Description

La présente invention est relative à une base alimentaire, à son procédé de préparation, à son utilisation à titre d'ingrédient, notamment pour la préparation d'une pâte à beignets liquide, à une pâte à beignets liquide et à son procédé de préparation, ainsi qu'aux beignets obtenus en mettant en oeuvre ce procédé.

Les beignets sont des préparations alimentaires salées ou sucrées préparés par cuisson d'une pâte liquide dans un bain de friture à température élevée.

Du fait de leur mode de préparation, les beignets présentent l'inconvénient majeur d'être gras, aussi bien au toucher lorsqu'ils sont manipulés par le préparateur ou le consommateur qu'en bouche lors de leur consommation. En effet, au cours de la cuisson, une partie non négligeable de l'huile de friture imprègne la pâte à beignets. Lors du conditionnement ultérieur des beignets, l'huile emprisonnée en fin de cuisson dans ces beignets a tendance à tacher et à graisser les emballages alimentaires (cartons, films plastiques, etc...) leur conférant un aspect très désagréable pour le consommateur. Par ailleurs, la manipulation de ces beignets, aussi bien par le préparateur lors de leur élaboration ou de leur emballage que par le consommateur est déplaisante car elle laisse les doigts gras. Enfin, lors de leur consommation et pour des raisons diététiques évidentes, il est indispensable de limiter au maximum la quantité d'huile de friture absorbée par les beignets.

C'est donc afin de remédier à l'ensemble des ces inconvénients que les Inventeurs se sont donnés pour but de pourvoir à une base alimentaire apte à être utilisée pour la préparation de beignets et conférant au produit final, après cuisson dans un bain d'huile, un aspect très peu gras, non sec, croustillant et moelleux.

WO-A-0167870 divulgue une pâte apte à être utilisée pour la préparation de beignets et conférant au produit cuit un aspect croustillant en surface et moelleux à l'intérieur.

La présente Invention a donc pour premier objet une base alimentaire, caractérisée par le fait qu'elle contient, en poids par rapport au poids total de ladite base alimentaire :
- de 20 à 50 % environ d'une farine renfermant du gluten,
- de 15 à 45 % environ d'amidon,
- de 5 à 15 % environ de fécule de pomme de terre,
- de 2 à 10 % environ de sucre,
- de 0,1 à 5 % environ de poudre de fromage blanc,
- de 1 à 10 % environ de poudre de yaourt écrémé,
- de 0,2 à 7 % environ d'au moins un agent épaississant,
- de 0,5 à 5 % environ de poudre à lever,
- de 0,3 à 10 % environ d'au moins un agent émulsifiant,
- de 0,1 à 3 % environ de poudre de blanc d'oeuf,
- de 0,5 à 3 % environ de sel, et
- de 0,001 à 1 % environ d'un agent de conditionnement du gluten.

La base alimentaire conforme à l'Invention se présente sous la forme d'une composition sèche pulvérulente (farine) qui peut avantageusement être utilisée à titre d'ingrédient alimentaire pour la fabrication de beignets salés ou sucrés, en mélange avec les différents ingrédients additionnels habituellement utilisés.

De façon surprenante, les Inventeurs ont mis en évidence que l'utilisation de cette base alimentaire à titre d'ingrédient dans la préparation de beignets permet de conférer à ces derniers, en dépit d'une cuisson dans un bain d'huile, un aspect très peu gras, aussi bien au toucher que lors de leur consommation, non sec, croustillant à leur périphérie et moelleux à l'intérieur.

De façon plus précise, mais sans vouloir être lié à une quelconque théorie, les Inventeurs se sont aperçus que la combinaison des quatre ingrédients que sont la poudre de yaourt, la poudre de fromage blanc, la poudre de blanc d'oeufs et la fécule de pomme de terre, dans les proportions respectives indiquées ci-dessus, permet de conférer au beignet final ce caractère très peu gras, non sec, croustillant en surface et moelleux à l'intérieur. En particulier, la poudre de yaourt, la poudre de fromage blanc et la poudre de blanc d'oeufs évitent une forte absorption de matières grasses au cours de la cuisson dans le bain d'huile puisque la teneur en huile absorbée dans le produit fini après cuisson n'est au maximum que de 6 % en poids environ par rapport au poids total du produit fini. Cette teneur est extrêmement basse puisque les beignets classiques habituellement disponibles sur le marché alimentaire renferment entre 10 et 20 % en poids d'huile de cuisson.

Cette faible teneur en matière grasse est particulièrement avantageuse dans la mesure où la demande des consommateurs est de plus en plus orientée vers les produits alimentaires faiblement caloriques ou à teneurs réduites en matières grasses mais qui restent néanmoins attractifs du point de vue de leur aspect, de leur texture et de leur saveur.

Par ailleurs, l'incorporation de fécule de pomme de terre dans les proportions indiquées précédemment permet d'optimiser le caractère moelleux ("non sec") du beignet après cuisson, ainsi que le croustillant de la périphérie du produit. En effet, l'incorporation de cet ingrédient, tout en étant essentielle pour l'obtention de ce caractère moelleux, ne doit par contre pas interférer sur la qualité générale de la préparation et du produit fini, à savoir : pas de changement de texture du produit avant cuisson, par d'altération du goût final après cuisson, pas de modification organoleptique après remise en condition, c'est-à-dire après réchauffage des beignets juste avant leur consommation.

Dans les proportions indiquées ci-dessus, la farine permet d'obtenir une bonne cohésion de la pâte. Lorsque la proportion de farine dépasse 50 % en poids par rapport au poids total de la base alimentaire (ce qui correspond à environ 14,5 % en poids par rapport au poids total du produit fini lorsque cette base alimentaire est utilisée à raison d'environ 36 % en poids pour la préparation d'une pâte à beignets liquide), alors le produit fini est trop collant.

Ladite farine est de préférence choisie parmi les farines de froment, de seigle, d'épeautre, de châtaigne, d'avoine, d'orge, de sarrasin et la farine complète ; la farine de froment étant particulièrement préférée selon l'Invention.

Selon une forme de réalisation avantageuse de l'Invention, la farine représente de 38 à 42 % en poids environ par rapport au poids total de la base alimentaire.

Dans les proportions indiquées ci-dessus, l'amidon joue un rôle d'épaississant, limite l'absorption d'huile et d'eau dans le produit fini et participe au caractère moelleux du produit fini. Lorsque la proportion d'amidon dépasse 45 % en poids par rapport au poids total de la base alimentaire (ce qui correspond à environ 13 % en poids par rapport au poids total du produit fini lorsque cette base alimentaire est utilisée à raison d'environ 36 % en poids pour la préparation d'une pâte à beignets liquide), alors la pâte à beignets devient caoutchouteuse.

L'amidon est de préférence choisi parmi les amidons naturels ou modifiés tels que les amidons natifs de blé et de mais ; l'amidon natif de blé étant particulièrement préféré selon l'Invention.

Selon une forme de réalisation avantageuse de l'Invention, l'amidon représente de 34 à 38 % en poids environ par rapport au poids total de la base alimentaire.

Également de manière préférée, la fécule de pomme de terre représente de 6 à 10 % en poids environ par rapport au poids total de la base alimentaire.

Le sucre utilisé dans la base alimentaire conforme à l'Invention peut être choisi parmi le sucre glace, le sucre en poudre, le sucre cristallisé ; le sucre glace étant particulièrement préféré.

Selon une forme de réalisation avantageuse de l'Invention, le sucre représente de 3 à 6 % en poids environ par rapport au poids total de la base alimentaire.

Également de manière préférée, la poudre de fromage blanc représente de 1,5 à 3,4 % en poids environ ; la poudre de yaourt écrémé représente de 3,5 à 6,5 % en poids environ et la poudre de blanc d'oeuf représente de 0,5 à 2 % en poids environ par rapport au poids total de la base alimentaire.

L'agent épaississant peut être choisi parmi les agents épaississants d'origine végétale classiquement utilisés dans le domaine agro-alimentaire et parmi lesquels on peut notamment citer les farines d'algues telles que la farine de guar et d'agar-agar, les gélatines, les pectines et les celluloses ; l'utilisation de farine de guar étant particulièrement préférée selon l'Invention.

Selon une forme de réalisation avantageuse de l'Invention, l'agent épaississant représente de 0,4 à 2 % en poids environ par rapport au poids total de la base alimentaire.

La poudre à lever, qui est utilisée pour conférer au produit fini une texture légère et alvéolée, peut être choisie parmi les poudres à lever classiquement utilisées dans le domaine agro-alimentaire et parmi lesquelles on peut notamment citer les poudres à lever constituées d'un mélange de bicarbonate de soude et de pyrophosphates tels que le pyrophosphate de soude.

Selon une forme de réalisation préférée de l'Invention, la poudre à lever représente de 1 à 2,5 % en poids environ par rapport au poids total de la base alimentaire.

Le ou les agents émulsifiants présents au sein de la base alimentaire conforme à l'Invention peuvent notamment être choisis pan-ni l'acide alginique et ses dérivés, les carraghénates, les farines de graines végétales telles que les graines de caroube, de tamarin, les polyphosphates tels que les polyphosphates de sodium ou de potassium, les mono- et diglycérides d'acides gras alimentaires et les esters acétique, lactique, citrique, tartrique ou diacétyl-tartrique des mono- et diglycérides d'acides gras alimentaires, ainsi que leurs sels de sodium, de potassium ou de calcium, et leurs mélanges.

Selon une forme de réalisation préférée de l'Invention, le ou les agents émulsifiants représentent de 0,5 à 1,5 % en poids environ par rapport au poids total de la base alimentaire.

Le sel présent au sein de la base alimentaire conforme à l'Invention est de préférence du chlorure de sodium sous forme anhydre.

Selon une forme de réalisation préférée de l'Invention, le sel représente de 0,8 à 1,5 % en poids environ par rapport au poids total de la base alimentaire.

Selon l'Invention, on entend par agent de conditionnement du gluten, les composés présentant une action oxydante sur le gluten de manière à favoriser son allongement et par voie de conséquence la souplesse de la pâte à beignets qui sera préparée à partir de la base alimentaire conforme à l'Invention. Cet agent de conditionnement du gluten peut notamment être choisi parmi la L-cystéine, la levure désactivée et les enzymes réducteurs tels que les mélanges complexes de protéases ; l'utilisation de L-cystéine étant particulièrement préférée.

Selon une forme de réalisation préférée de l'Invention, le ou les agents de conditionnement du gluten représentent de 0,003 à 0,5 % en poids environ par rapport au poids total de la base alimentaire.

Une base alimentaire tout particulièrement préférée selon l'Invention a la composition suivante (en poids par rapport au poids total de ladite base alimentaire) :
- Farine de froment 40,5 %
- Amidon natif de blé 36 %
- Fécule de pomme de terre 8 %
- Poudre de yaourt écrémé 5 %
- Sucre glace 4 %
- Poudre de fromage blanc 2 %
- Sel fin anhydre 1 %
- Poudre de blanc d'oeuf 0,9 %
- Pyrophosphate de soude 0,8 %
- Bicarbonate de soude 0,6 %
- Farine de guar 0,5 %
- Esters de glycérides d'acides gras et d'acide mono- et diacétyltartrique : E472e selon la liste européenne des additifs autorisés en alimentation (INC Hebdo., n°1058 du 4 décembre 1998) 0,4 %
- Mélange de mono- et de distéarate de glycéryl (E471) 0,3 %
- L-cystéine 0,003 %

De façon classique, la base alimentaire conforme à l'Invention peut être préparée par pesée et simple mélange des différents ingrédients qui la composent, de préférence sous agitation manuelle ou mécanique et horizontale mécanique.

Un autre objet de l'Invention est l'utilisation de la base alimentaire telle que décrite ci-dessus à titre d'ingrédient pour la préparation d'une pâte à beignets liquide, au sein de laquelle ladite base alimentaire représente de préférence de 30 à 45 % en poids environ et encore plus préférentiellement de 35 à 42 % en poids environ.

La présente Invention a donc également pour objet une pâte à beignets liquide, caractérisée par le fait qu'elle comprend, en poids par rapport au poids total de ladite pâte :
- de 30 à 45 % environ d'une base alimentaire telle que définie ci-dessus,
- de 12 à 20 % environ d'eau, de préférence de 14 à 18 %,
- des oeufs entiers, à raison de 11 à 19 % environ, de préférence de 15 à 18 %,
- au moins une matière grasse solide ou semi-solide à température ambiante, de préférence à raison de 4 à 7 % environ, et encore plus préférentiellement de 5 à 6,5 % environ,
- au moins une huile végétale liquide à température ambiante, de préférence à raison de 4 à 7 % environ et encore plus préférentiellement de 5 à 6,5 % environ, et éventuellement
- un ou plusieurs marquants et/ou inclusions.

Selon une forme de réalisation avantageuse de l'Invention, la base alimentaire représente de 35 à 42 % en poids environ du poids total de la pâte à beignets.

Les oeufs frais présents au sein de cette pâte peuvent notamment être utilisés frais, sous forme de coule fraiche pasteurisée ou bien encore sous forme surgelée après remise à la température ambiante.

La ou les matières grasses solides ou semi-solides à température ambiante sont de préférence choisies parmi les margarines composées, entre autres ingrédients tels qu'agents émulsifiants et eau, d'un mélange de corps gras d'origine animale ou végétale, ces corps gras étant de préférence choisis parmi les huiles de palme, de palmiste, de coprah (ou huile de coco), de soja, de tournesol, de colza, etc...

La ou les huiles végétales liquides à température ambiante peuvent par exemple être choisies parmi les huiles de tournesol, de colza, de palme, de chanvre, etc...

Selon l'Invention, les termes "marquant" et "inclusions" désignent l'ensemble des garnitures salées ou sucrées que l'on peut incorporer à la pâte à beignets conforme à l'Invention dans le but de préparer différentes variétés de beignets.

Selon une forme de réalisation particulièrement préférée de l'Invention, la pâte à beignets renferme un ou plusieurs marquants et/ou inclusions ; ces marquants ou inclusions pouvant être utilisés sous forme fraiche ou surgelée.

Parmi ces marquants ou inclusions, on peut par exemple citer les morceaux de jambon (cubes ou allumettes, etc...), d'olives dénoyautées (tranches), de poivrons (lanières, dés, etc...), de fromages, de poissons et de succédanés de poissons tels que de surimi, de fruits de mer tels que les crevettes décortiquées et le crabe en miettes, les lardons, les morceaux de volailles (poulet, dinde, canard, etc...), de fruits, les fruits secs (noix, noisettes, amandes, etc...), les fruits confits, les pépites de chocolat, etc...

Ces marquants ou inclusions ont de préférence une taille comprise entre 1 x 1 x 1 mm et 100 x 50 x 10 mm.

Lorsqu'ils sont utilisés, ces marquants ou inclusions représentent de préférence de 15 à 30 % en poids environ et encore plus préférentiellement de 18 à 22 % en poids environ du poids total de la pâte à beignets.

En plus des ingrédients de base et des marquants ou inclusions cités ci-dessus, la pâte à beignets peut en outre renfermer un ou plusieurs agents de sapidité tel que du sel sous forme par exemple de sel iodé ou de fleur de sel, ainsi qu'un ou plusieurs agent aromatisants naturels ou de synthèse par exemple choisis parmi les arômes identiques au marquant utilisé, les herbes aromatiques, etc...

Selon une forme de réalisation particulièrement avantageuse de l'invention, la pâte à beignets a la composition suivante, en poids par rapport au poids total de ladite pâte à beignets :
- Base alimentaire telle que définie ci-dessus 36 %
- Marquants et/ou inclusions 20 %
- Eau 17 %
- OEufs frais 15,5 %
- Matières grasses 5,5 %
- Huile végétale 5,5 %
- Sel 0 à 2 %
- Agent(s) aromatisant(s) 0 à 2 %

La présente Invention a également pour objet un procédé de préparation d'une telle pâte à beignets caractérisé par le fait qu'il comprend les étapes suivantes :
a) la préparation d'une base alimentaire telle que décrite ci-dessus ; puis
b) le mélange, sous agitation et à une température comprise entre 10 et 12°C, de ladite base alimentaire avec de l'eau, au moins une huile végétale liquide à température ambiante, au moins une matière grasse solide ou semi-solide à température ambiante, des oeufs et éventuellement des agents aromatisants.

Lorsque la pâte à beignets conforme à l'Invention renferme un ou plusieurs marquants ou inclusions, le procédé conforme à l'Invention comprend alors une étape supplémentaire c) d'ajout des marquants ou inclusions, sous agitation modérée.

Selon l'Invention, on entend par agitation modérée, une agitation dont la vitesse et la durée sont ajustées de telle manière à conserver de façon intacte les morceaux de marquants ou inclusions incorporés dans la pâte à beignets.

Lorsque la pâte à beignets est terminée, celle-ci est de préférence conservée à une température comprise entre 5 et 20°C.

L'invention a enfin pour objet un procédé de préparation d'un beignet mettant en oeuvre la pâte à beignets conforme à l'Invention, caractérisé par le fait qu'il comprend les étapes suivantes :
- le partage de la pâte à beignets telle que définie ci-dessus, en portions individualisées d'un poids compris entre 3 et 20 g,
- la cuisson de chacune desdites portions dans un bain d'huile porté à une température comprise entre 160 et 200°C, pendant une durée comprise entre 2 et 4 minutes,
- l'égouttage des beignets ainsi obtenus.

Selon une forme de réalisation avantageuse de ce procédé, le partage de la pâte est réalisé à l'aide d'une doseuse équipée d'un coupe-goutte, ce système permettant de sectionner les morceaux de marquants et non de les écraser.

Egalement de manière avantageuse, l'huile de cuisson est de l'huile de palme liquide bi-fractionnée.

La durée de cuisson variera en fonction du poids de chacun des beignets, cependant, et à titre d'exemple, pour un beignet salé pesant environ 10g, une durée de cuisson d'environ 3 minutes et 15 secondes est particulièrement bien adaptée.

Selon l'Invention, la phase d'égouttage des beignets est de préférence conduite pendant environ 2 à 5 minutes, à température ambiante, sur un tapis absorbant, le tout dans un environnement sous flux d'air.

Lorsque la préparation des beignets est terminée, ceux-ci peuvent ensuite être directement consommés ou bien conditionnés en vue d'une consommation ultérieure. Ce conditionnement peut notamment être effectué par simple réfrigération à environ 4°C ou par congélation.

Les produits ainsi conditionnés pourront alors être réchauffés au four traditionnel (par exemple à 180°C environ pendant 15 minutes environ suivant la puissance du four), à la friteuse (par exemple pendant 5 min environ dans un bain d'huile portée à une température d'environ 180°C lorsque les beignets sont encore congelés) ou bien encore au four à micro-ondes. Dans ce dernier cas, le four sera de préférence équipé d'une fonction grill ou d'une fonction "crisp" afin de conserver aux beignets leur caractère croustillant.

Enfin, l'Invention a pour objet les beignets cuits susceptibles d'être obtenus en mettant en oeuvre le procédé conforme à l'Invention.

Outre les dispositions qui précèdent, l'Invention comprend encore d'autres dispositions qui ressortiront de la description qui va suivre, qui se réfère à un exemple de préparation d'une base alimentaire conforme à l'Invention, à un exemple de préparation d'une pâte à beignets conforme à l'Invention, ainsi qu'à plusieurs exemples comparatifs d'évaluation sensorielle démontrant le caractère critique des différents ingrédients constituant la base alimentaire de l'Invention et de leurs proportions respectives.

### EXEMPLE 1 : PRÉPARATION D'UNE BASE ALIMENTAIRE CONFORME À L'INVENTION

Dans un récipient adapté, on introduit les ingrédients suivants :
- Farine de froment 40,5 g
- Bicarbonate de soude 0,6 g
- Pyrophosphate de soude 0,8 g
- Émulsifiant : E 472e 0,4 g
- Sel fin anhydre 1,0 g
- Sucre glace 4,0 g
- Fécule de pomme de terre 8,0 g
- Amidon natif de blé 36 g
- Émulsifiant: E 471 0,3 g
- Farine de guar 0,5 g
- L-cystéine 0,003g
- Poudre de blanc d'oeuf 0,9 g
- Poudre de fromage blanc 2,0 g
- Poudre de yaourt maigre 5,0 g

L'ensemble de ces ingrédients est intimement mélangé à la main ou de façon mécanique à faible vitesse.

On obtient ainsi une base alimentaire (BA-1) conforme à l'Invention pouvant ensuite être utilisée à titre d'ingrédient pour la préparation d'une pâte à beignets.

### EXEMPLE 2 : PRÉPARATION D'UNE PÂTE A BEIGNETS CONFORME À L'INVENTION

Dans un batteur/mélangeur planétaire muni d'un outil mélangeur de type "feuille" et tel que vendu sous la dénomination commerciale PHEBUS ® par la société V.M.I. (Montaigu, France), on introduit les ingrédients suivants (en poids par rapport au poids total de la pâte à beignets) :
- Base alimentaire BA-1 telle que préparée à l'exemple 1 36 %
- Eau 17 %
- OEufs frais 15,5 %
- Matière grasse 5,5 %
- Huile végétale 5,5 %
- Sel 1 %
- Arôme d'emmental 1,2 %

Ces différents ingrédients sont ensuite mélangés pendant 2 minutes à une vitesse de 30 tours/minute, puis pendant 4 minutes à une vitesse de 120 tours/minute.

On ajoute ensuite 20 % d'emmental râpé, puis on mélange à nouveau l'ensemble pendant une minute à une vitesse de 30 tours/minute.

La pâte à beignets ainsi obtenue est portée à une température de 16°C puis répartie en parts pesant chacune 10 g, à l'aide d'une doseuse équipée d'un coupe-goutte.

Chacune des parts est ensuite mise à cuire dans un bain d'huile, 100 % palme liquide, à une température de 180°C pendant 3 minutes et 15 secondes.

Les caractéristiques physico-chimiques de l'huile de palme utilisée sont les suivantes :
- Point de fumée 240°C
- Point de fusion 14-16°C
- Point de ramollissement 15°C
- Point de saponification 196
- Indice d'iode 68
- Acides gras poly insaturés 14 %
- Acides gras mono insaturés 49 %
- Acides gras saturés 37 %

Lorsque la cuisson est terminée, chaque beignet est égoutté pendant 3 minutes à température ambiante, sur un tapis absorbant, sous flux d'air.

On obtient ainsi des beignets prêts à être consommés frais ou qui peuvent également être conditionnés pour un stockage en milieu réfrigéré à une température d'environ 4-5°C ou surgelés.

### EXEMPLE 3 : ÉVALUATION SENSORIELLE DU CARACTÈRE GRAS OU NON GRAS DES BEIGNETS

Afin de déterminer quelle est la meilleure adéquation possible entre les pourcentages respectifs de poudre de yaourt écrémé, de poudre de fromage blanc et de poudre de blanc d'oeufs, différentes bases alimentaires (BA-2 à BA-5) ont été préparées selon le procédé décrit ci-dessus à l'exemple 1.

Ces différentes bases alimentaires BA-2 à BA-5 sont identiques à la base alimentaire BA-1 (nature et % des ingrédients) sauf en ce qui concerne les ingrédients mentionnés dans le tableau 1 ci-après (en poids par rapport au poids total de la base alimentaire) :

**TABLEAU I**

| **Base alimentaire** | **Poudre de Yaourt écrémé (%)** | **Poudre de fromage blanc (%)** | **Poudre de blanc d'oeufs (%)** |
|---|---|---|---|
| BA-2 | 2,8 | 0,6 | 0,2 |
| BA-3 | 3,6 | 1,2 | 0,5 |
| BA-4 | 4,2 | 1,7 | 0,8 |
| BA-5 | 5,6 | 2,6 | 1,0 |

Ces différentes bases alimentaires BA-2 à BA-5, ainsi que la base alimentaire BA-1 telle que préparée ci-dessus à l'exemple 1 sont ensuite utilisées à titre d'ingrédient pour la préparation de pâtes à beignets PB-1 à PB-5, à raison de 36 % en poids par rapport au poids total de la pâte à beignets, dans les conditions et avec les ingrédients décrits ci-dessus à l'exemple 2.

Des beignets B-1 à B-5 sont ensuite préparés comme décrit ci-dessus à l'exemple 2, mais en l'absence de marquant. (emmental râpé) de façon à ne pas influencer les résultats.

Un panel de 20 personnes (11 hommes et 9 femmes) a ensuite effectué une analyse sensorielle des beignets ainsi préparés. Le but de l'évaluation était de déterminer pour quelles concentrations de poudre de yaourt, de poudre de fromage blanc et de poudre de blanc d'oeufs, on obtient un produit le moins gras possible au touché et en bouche après un réchauffage de 15 minutes à 180°C, et ce sans modification néfaste des caractéristiques (organoleptiques, forme, goût, texture).

Il a été demandé à chaque personne de classer les beignets suivant un ordre décroissant quant à la sensation de gras en bouche et au touché.

Les résultats obtenus sont reportés dans le tableau II ci-après :

**TABLEAU II**

| **Personne** | **Le plus gras →Le moins gras** | | | | |
|---|---|---|---|---|---|
| 1 | B2 | B3 | B4 | B1 | B5 |
| 2 | B2 | B3 | B4 | B1 | B5 |
| 3 | B3 | B2 | B4 | B1 | B5 |
| 4 | B2 | B3 | B4 | B1 | B5 |
| 5 | B3 | B2 | B4 | B5 | B1 |
| 6 | B2 | B3 | B4 | B1 | B5 |
| 7 | B2 | B3 | B4 | B1 | B5 |
| 8 | B2 | B3 | B4 | B1 | B5 |
| 9 | B3 | B2 | B4 | B1 | B5 |
| 10 | B2 | B4 | B3 | B1 | B5 |
| 11 | B2 | B3 | B4 | B5 | B1 |
| 12 | B2 | B3 | B4 | B1 | B5 |
| 13 | B2 | B3 | B6 | B4 | B1 |
| 14 | B3 | B2 | B4 | B1 | B5 |
| 15 | B2 | B3 | B4 | B1 | B5 |
| 16 | B3 | B2 | B4 | B1 | B5 |
| 17 | B3 | B2 | B6 | B4 | B1 |
| 18 | B2 | B3 | B4 | B1 | B5 |
| 19 | B2 | B3 | B4 | B5 | B1 |
| 20 | B2 | B3 | B4 | B1 | B5 |

La moyenne de ce classement est reportée dans le Tableau III ci-après :

**TABLEAU III**

| **Beignets** | **Appréciation globale** |
|---|---|
| **B2** | Produit trop gras |
| **B3** | Produit trop gras |
| **B4** | Produit gras |
| **B1** | **Meilleure adéquation** |
| **B5** | Changement de la texture de la pâte à beignets |

L'ensemble de ces résultats montre qu'il y a peu de différence entre les recettes B2 et B3. Les meilleures recettes sont B1 et B5. Cependant, bien que la recette B5 soit celle pour laquelle les meilleurs résultats aient été obtenus quant au caractère non gras, on préfère utiliser la recette B1 correspondant à un beignet préparé à partir de la base alimentaire BA-1 telle décrite ci-dessus à l'exemple 1, car avec la base alimentaire BA-5 utilisée pour préparer la pâte à beignets, on observe un changement de la texture de la pâte à beignets PB-5 correspondante; rendant sa mise en oeuvre plus difficile.

Ces résultats mettent donc en évidence que la présence de 2 % en poids de poudre de fromage blanc, de 5 % en poids de poudre de yaourt écrémé et de 0,9 % en poids de poudre de blanc d'oeufs au sein de la base alimentaire conforme à l'Invention, ce qui correspond respectivement pour ces ingrédients à des valeurs de 0,7 ; 1,8 et 0,33 % en poids par rapport au poids total de la pâte à beignets, permet d'obtenir un produit final très peu gras et non sec, au touché comme en bouche, en dépit d'une cuisson dans un bain d'huile, tout en conservant une texture et des caractéristiques organoleptiques adéquates : aspect croustillant mais non sec, faisabilité industrielle du procédé, homogénéité des produits.

### EXEMPLE 4 : ÉVALUATION SENSORIELLE DU CARACTÈRE MOELLEUX ET CROUSTILLANT DES BEIGNETS

Afin de déterminer quelle est la concentration de fécule de pomme de terre à utiliser pour optimiser au mieux le caractère moelleux à l'intérieur ("non sec"), ainsi que le croustillant des beignets conformes à l'Invention, une étude sensorielle comparant des beignets préparés à partir de bases alimentaires contenant des teneurs variables de fécule de pomme de terre a été réalisée.

Ces différentes bases alimentaires BA-6 à BA-11 sont identiques à la base alimentaire BA-1 (nature et % des ingrédients, en particulier 2 % en poids de poudre de fromage blanc, 5 % en poids de poudre de yaourt écrémé et 0,9 % en poids de poudre de blanc d'oeufs) sauf en ce qui concerne la teneur en fécule de pomme de terre pour laquelle les quantités utilisées sont indiquées dans le Tableau IV ci-après (en poids par rapport au poids total de la base alimentaire) :

**TABLEAU IV**

| **Base alimentaire** | **Fécule de pomme de terre (%)** |
|---|---|
| **BA-6** | 2,7 |
| **BA-7** | 5,4 |
| **BA-8** | 6,7 |
| **BA-9** | 7,3 |
| **BA-10** | 8,5 |
| **BA-11** | 9,5 |

Ces différentes bases alimentaires BA-6 à BA-11, ainsi que la base alimentaire BA-1 telle que préparée ci-dessus à l'exemple 1 et renfermant 8 % en poids de fécule de pomme de terre, sont ensuite utilisées à titre d'ingrédient pour la préparation de pâtes à beignets PB-1 et PB-6 à PB-11 à raison de 36 % en poids par rapport au poids total de la pâte à beignets, dans les conditions et avec les ingrédients décrits ci-dessus à l'exemple 2.

Des beignets B-1 et B-6 à B-11 sont ensuite préparés comme décrit ci-dessus à l'exemple 2, mais en l'absence de marquant (emmental râpé) de façon à ne pas influencer les résultats.

Un panel de 18 personnes (9 hommes et 9 femmes) a ensuite effectué une analyse sensorielle des beignets ainsi préparés. Le but de l'évaluation était de déterminer pour quelle concentration de fécule de pomme de terre on obtient le beignet le plus croustillant à l'extérieur et le plus moelleux possible à l'intérieur, et cela sans modification néfaste des caractéristiques de celui-ci (organoleptiques, forme, goût, texture, etc...).

A titre comparatif, les beignets B1 et B6 à B11 ont également été comparés à des beignets non conformes à l'Invention, c'est-à-dire préparés avec une base alimentaire en tout point identique aux bases alimentaires BA-1 et BA-6 à B-11, mais exempte de fécule de pomme de terre.

Les résultats obtenus figurent dans le Tableau V ci-après :

**TABLEAU V**

| **BEIGNETS** | **Résultat (par rapport aux beignets préparés avec une base alimentaire sans fécule de pomme de terre)** |
|---|---|
| **B-6** | Pas de différence notable |
| **B-7** | Pas de différence notable |
| **B-8** | Produit plus moelleux |
| **B-9** | Produit plus moelleux et plus croustillant |
| **B-1** | **Produit encore plus moelleux et plus croustillant** |
| **B-10** | Changement dans la texture de la pâte (moins bonne cohésion et fluidité plus importante) |
| **B-11** | Déstructuration de la pâte |

Ces résultats montrent qu'à des pourcentages de 2,7 et 5,4 (beignets B-6 et B-7), la présence de fécule de pomme de terre n'entraîne pas de différence significative quant au caractère moelleux ou croustillant par rapport à un beignet préparé à partir d'une base alimentaire ne renfermant pas de fécule de pomme de terre. Ils montrent également qu'à partir d'une quantité d'environ 8,5 %, la présence de fécule de pomme de terre entraîne un changement non profitable sur la structure de la préparation, la rendant moins facile à mettre en oeuvre pour la préparation ultérieure des beignets.

Le beignet présentant les meilleurs résultats en terme de caractère moelleux à l'intérieur et croustillant à l'extérieur est le beignet B1, préparé à partir de la base alimentaire BA-1 telle que préparée ci-dessus à l'exemple 1 et renfermant 8 % en poids de fécule de pomme de terre.

Il a également été demandé à chaque personne du panel de désigner, parmi les 7 beignets B-1 et B-6 à B-11 testés, les trois beignets considérés comme représentant le meilleur compromis "moelleux/croustillant/texture".

Les résultats obtenus sont reportés dans le Tableau VI ci-après :

**TABLEAU VI**

| **Personne** | **CLASSEMENT** | | |
|---|---|---|---|
| | **Premier** | **Deuxième** | **Troisième** |
| **1** | **B10** | **B1** | **B9** |
| **2** | **B1** | **B9** | **B10** |
| **3** | **B1** | **B11** | **B10** |
| **4** | **B1** | **B10** | **B9** |
| **5** | **B12** | **B11** | **B10** |
| **6** | **B11** | **B10** | **B12** |
| **7** | **B12** | **B11** | **B10** |
| **8** | **B1** | **B9** | **B10** |
| **9** | **B11** | **B1** | **B10** |
| **10** | **B1** | **B9** | **B10** |
| **11** | **B1** | **B9** | **B10** |
| **12** | **B1** | **B10** | **B9** |
| **13** | **B1** | **B11** | **B10** |
| **14** | **B1** | **B9** | **B10** |
| **15** | **B10** | **B1** | **B9** |
| **16** | **B1** | **B10** | **B9** |
| **17** | **B1** | **B9** | **B10** |
| **18** | **B1** | **B11** | **B10** |

Ces résultats montrent que la première place, c'est-à-dire le beignet présentant le meilleur compris moelleux/croustillant/texture, est donnée au beignet B1 préparé à partir de la base alimentaire renfermant 8 % en poids de fécule de pomme de terre (ainsi que 2 % en poids de poudre de fromage blanc, 5 % en poids de poudre de yaourt écrémé et 0,9 % en poids de poudre de blanc d'oeufs), ce qui correspondant à une teneur en fécule de pomme de terre d'environ 2,9 % en poids par rapport au poids total de la pâte à beignets.

## Revendications

1. Base alimentaire, **caractérisée par le fait qu'**elle contient, en poids par rapport au poids total de ladite base alimentaire :
- de 20 à 50 % d'une farine renfermant du gluten ou d'une farine choisie parmi la farine de châtaigne et la farine de sarrasin,
- de 15 à 45 % d'amidon,
- de 5 à 15 % de fécule de pomme de terre,
- de 2 à 10 % de sucre,
- de 0,1 à 5 % de poudre de fromage blanc,
- de 1 à 10 % de poudre de yaourt écrémé,
- de 0,2 à 7 % d'au moins un agent épaississant,
- de 0,5 à 5 % de poudre à lever,
- de 0,3 à 10 % d'au moins un agent émulsifiant,
- de 0,1 à 3 % de poudre de blanc d'oeuf,
- de 0,5 à 3 % de sel, et
- de 0,001 à 1 % d'un agent de conditionnement du gluten.

2. Base alimentaire selon la revendication 1, **caractérisée par le fait que** ladite farine est choisie parmi les farines de froment, de seigle, d'épeautre, de châtaigne, d'avoine, d'orge, de sarrasin et la farine complète.

3. Base alimentaire selon la revendication 1 ou 2, **caractérisée par le fait que** ladite farine représente de 38 à 42 % en poids par rapport au poids total de la base alimentaire.

4. Base alimentaire selon l'une quelconque des revendications précédentes, **caractérisée par le fait que** l'amidon est choisi parmi les amidons natifs de blé et de mais.

5. Base alimentaire selon l'une quelconque des revendications précédentes, **caractérisée par le fait que** l'amidon représente de 34 à 38 % en poids par rapport au poids total de la base alimentaire.

6. Base alimentaire selon l'une quelconque des revendications précédentes, **caractérisée par le fait que** la fécule de pomme de terre représente de 6 à 10 % en poids par rapport au poids total de la base alimentaire.

7. Base alimentaire selon l'une quelconque des revendications précédentes, **caractérisée par le fait que** le sucre représente de 3 à 6 % en poids par rapport au poids total de la base alimentaire.

8. Base alimentaire selon l'une quelconque des revendications précédentes, **caractérisée par le fait que** la poudre de fromage blanc représente de 1,5 à 3,4 % en poids ; la poudre de yaourt écrémé représente de 3,5 à 6,5 % en poids et la poudre de blanc d'oeuf représente de 0,5 à 2 % en poids par rapport au poids total de la base alimentaire.

9. Base alimentaire selon l'une quelconque des revendications précédentes, **caractérisée par le fait que** l'agent épaississant est choisi parmi les farines d'algues telles que les farines de guar et d'agar-agar, les gélatines, les pectines et les celluloses.

10. Base alimentaire selon l'une quelconque des revendications précédentes, **caractérisée par le fait que** l'agent épaississant représente de 0,4 à 2 % en poids par rapport au poids total de la base alimentaire.

11. Base alimentaire selon l'une quelconque des revendications précédentes, **caractérisée par le fait que** la poudre à lever est choisie parmi les poudres à lever constituées d'un mélange de bicarbonate de soude et de pyrophosphates tels que le pyrophosphate de soude.

12. Base alimentaire selon l'une quelconque des revendications précédentes, **caractérisée par le fait que** la poudre à lever représente de 1 à 2,5 % en poids par rapport au poids total de la base alimentaire.

13. Base alimentaire selon l'une quelconque des revendications précédentes, **caractérisée par le fait que** le ou les agents émulsifiants sont choisis parmi l'acide alginique et ses dérivés, les carraghénates, les farines de graines végétales telles que les graines de caroube, de tamarin, les polyphosphates tels que les polyphosphates de sodium ou de potassium, les mono- et diglycérides d'acides gras alimentaires et les esters acétique, lactique, citrique, tartrique ou diacétyltartrique des mono- et diglycérides d'acides gras alimentaires, ainsi que leurs sels de sodium, de potassium ou de calcium, et leurs mélanges.

14. Base alimentaire selon l'une quelconque des revendications précédentes, **caractérisée par le fait que** le ou les agents émulsifiants représentent de 0,5 à 1,5 % en poids par rapport au poids total de la base alimentaire.

15. Base alimentaire selon l'une quelconque des revendications précédentes, **caractérisée par le fait que** les agents de conditionnement du gluten sont choisis parmi la L-cystéine, la levure désactivée et les enzymes réducteurs tels que les mélanges complexes de protéases.

16. Base alimentaire selon l'une quelconque des revendications précédentes, **caractérisée par le fait qu'**elle a la composition suivante (en poids par rapport au poids total de ladite base alimentaire) :
- Farine de froment 40,5 %
- Amidon natif de blé 36 %
- Fécule de pomme de terre 8 %
- Poudre de yaourt écrémé 5 %
- Sucre glace 4 %
- Poudre de fromage blanc 2 %
- Sel fin anhydre 1 %
- Poudre de blanc d'oeuf 0,9 %
- Pyrophosphate de soude 0,8 %
- Bicarbonate de soude 0,6 %
- Farine de guar 0,5 %
- Esters de glycérides d'acides gras et d'acide mono- et diacétyltartrique 0,4 %
- Mélange de mono- et de distéarate de glycéryl 0,3 %
- L-cystéine 0,003 %

17. Utilisation d'une base alimentaire telle que définie à l'une quelconque des revendications 1 à 16, à titre d'ingrédient pour la préparation d'une pâte à beignets liquide.

18. Utilisation selon la revendication 17, **caractérisée par le fait qu'**au sein de ladite pâte à beignets, ladite base alimentaire représente de 30 à 45 % en poids.

19. Pâte à beignets liquide, **caractérisée par le fait qu'**elle comprend, en poids par rapport au poids total de ladite pâte :
- de 30 à 45 % d'une base alimentaire telle que définie à l'une quelconque des revendications 1 à 16,
- de 12 à 20 % d'eau,
- des oeufs entiers, à raison de 11 à 19 %,
- au moins une matière grasse d'origine solide ou semi-liquide à température ambiante, à raison de 4 à 7 %,
- au moins une huile végétale liquide à température ambiante, à raison de 4 à 7 %, et éventuellement
- un ou plusieurs marquants et/ou inclusions.

20. Pâte à beignets selon la revendication 19, **caractérisée par le fait que** la base alimentaire représente de 35 à 42 % en poids du poids total de la pâte à beignets.

21. Pâte à beignets selon la revendication 19 ou 20,**caractérisée par le fait que** la ou les matières grasses solides ou semi-solides à température ambiante sont choisies parmi les margarines composées, entre autres ingrédients tels qu'agents émulsifiants et eau, d'un mélange de corps gras d'origine animale ou végétale, ces corps gras étant choisis parmi les huiles de palme, de palmiste, de coprah, de soja, de tournesol et de colza.

22. Pâte à beignets selon l'une quelconque des revendications 19 à 21, **caractérisée par le fait que** la ou les huiles végétales liquides à température ambiante sont choisies parmi les huiles de tournesol, de colza, de palme et de chanvre.

23. Pâte à beignets selon l'une quelconque des revendications 19 à 22, **caractérisée par le fait que** le ou les marquants et les inclusions sont choisis parmi les morceaux de jambon, d'olives dénoyautées, de poivrons, de fromages, de poissons et de succédanés de poissons, de fruits de mer, les lardons, les morceaux de volailles, de fruits, les fruits secs, les fruits confits et les pépites de chocolat.

24. Pâte à beignets selon l'une quelconque des revendications 19 à 23, **caractérisée par le fait que** lorsqu'ils sont utilisés, le ou les marquants ou inclusions représentent de 15 à 30 % en poids par rapport au poids total de la pâte à beignets.

25. Pâte à beignets selon l'une quelconque des revendications 19 à 24, **caractérisée par le fait qu'**elle a la composition suivante, en poids par rapport au poids total de ladite pâte à beignets :
- Base alimentaire telle que définie à l'une quelconque des revendications 1 à 16 36 %
- Marquants ou inclusions 20 %
- Eau 17 %
- OEufs frais 15,5 %
- Matières grasses 5,5 %
- Huile végétale 5,5 %
- Sel 0 à 2 %
- Agent(s) aromatisant(s) 0 à 2 %

26. Procédé de préparation d'une pâte à beignets telle que définie à l'une quelconque des revendications 19 à 25, **caractérisé par le fait qu'**il comprend les étapes suivantes :
a) la préparation d'une base alimentaire telle que définie à l'une quelconque des revendications 1 à 16 ; puis
b) le mélange, sous agitation et à une température comprise entre 10 et 12°C, de ladite base alimentaire avec de l'eau, au moins une huile végétale liquide à température ambiante, au moins une matière grasse solide ou semi-solide à température ambiante, des oeufs et éventuellement des agents aromatisants.

27. Procédé selon la revendication 26, **caractérisé par le fait que** la pâte à beignets renferme un ou plusieurs marquants ou inclusions et que ledit procédé comprend alors une étape supplémentaire c) d'ajout des marquants ou inclusions, sous agitation modérée.

28. Procédé de préparation d'un beignet, **caractérisé par le fait qu'**il comprend les étapes suivantes :
- le partage de la pâte à beignets telle que définie à l'une quelconque des revendications 19 à 25, en portions individualisées d'un poids compris entre 3 et 20 g,
- la cuisson de chacune desdites portions dans un bain d'huile porté à une température comprise entre 160 et 200°C, pendant une durée comprise entre 2 et 4 minutes, et
- l'égouttage des beignets ainsi obtenus.

29. Beignet cuit, **caractérisé par le fait qu'**il est susceptible d'être obtenu en mettant oeuvre le procédé tel que défini à la revendication 27 ou 28.

## Claims

1. Food base, **characterised in that** it contains, by weight relative to the total weight of said food base:
- 20 to 50 % of a flour containing gluten or a flour selected from chestnut flour and buckwheat flour,
- 15 to 45 % of starch,
- 5 to 15 % of potato starch,
- 2 to 10 % of sugar,
- 0.1 to 5 % of cottage cheese powder,
- 1 to 10 % of skimmed yoghurt powder,
- 0.2 to 7 % of at least one thickening agent,
- 0.5 to 5 % of raising agent,
- 0.3 to 10 % of at least one emulsifying agent,
- 0.1 to 3 % of egg white powder,
- 0.5 to 3 % of salt and
- 0.001 to 1 % of a gluten conditioning agent.

2. Food base according to claim 1, **characterised in that** said flour is selected from wheat, rye, spelt, chestnut, oat, barley, buckwheat and wholemeal flours.

3. Food base according to claim 1 or 2, **characterised in that** said flour accounts for 38 to 42 % by weight relative to the total weight of the food base.

4. Food base according to any one of the preceding claims, **characterised in that** the starch is selected from wheat and maize native starches.

5. Food base according to any one of the preceding claims, **characterised in that** the starch accounts for 34 to 38 % by weight relative to the total weight of the food base.

6. Food base according to any one of the preceding claims, **characterised in that** the potato starch accounts for 6 to 10 % by weight relative to the total weight of the food base.

7. Food base according to any one of the preceding claims, **characterised in that** the sugar accounts for 3 to 6 % by weight relative to the total weight of the food base.

8. Food base according to any one of the preceding claims, **characterised in that** the cottage cheese powder accounts for 1.5 to 3.4 % by weight, the skimmed yoghurt powder accounts for 3.5 to 6.5 % by weight and the egg white powder accounts for 0.5 to 2 % by weight relative to the total weight of the food base.

9. Food base according to any one of the preceding claims, **characterised in that** the thickening agent is selected from algae flours such as guar and agar agar flours, gelatines, pectins and celluloses.

10. Food base according to any one of the preceding claims, **characterised in that** the thickening agent accounts or 0.4 to 2 % by weight relative to the total weight of the food base.

11. Food base according to any one of the preceding claims, **characterised in that** the raising agent is selected from the raising agents comprising a mixture of sodium bicarbonate and pyrophosphates such as sodium pyrophosphate.

12. Food base according to any one of the preceding claims, **characterised in that** the raising agent accounts for 1 to 2.5 % by weight relative to the total weight of the food base.

13. Food base according to any one of the preceding claims, **characterised in that** the emulsifying agent or agents are selected from alginic acid and its derivatives, carraghenates, flours of vegetable seeds such as carob seeds, tamarind seeds, polyphosphates such as sodium or potassium polyphosphates, mono and diglycerides of edible fatty acids and acetic, lactic, citric, tartaric or diacetyl tartaric acid esters of mono and diglycerides of edible fatty acids, as well as their sodium, potassium or calcium salts, and mixtures thereof.

14. Food base according to any one of the preceding claims, **characterised in that** the emulsifying agent or agents account for 0.5 to 1.5 % by weight relative to the total weight of the food base.

15. Food base according to any one of the preceding claims, **characterised in that** the gluten conditioning agents are selected from L-cysteine, deactivated yeast and reducer enzymes such as complex mixtures of proteases.

16. Food base according to any one of the preceding claims, **characterised in that** it is based on the following composition (by weight relative to the total weight of said food base):
- wheat flour 40.5 %
- wheat native starch 36 %
- potato starch 8 %
- skimmed yoghurt powder 5 %
- icing sugar 4 %
- cottage cheese powder 2 %
- fine anhydrous salt 1 %
- egg white powder 0.9 %
- sodium pyrophosphate 0.8 %
- sodium bicarbonate 0.6 %
- guar flour 0.5 %
- mono and diacetyl tartaric and glycerides fatty acids esters 0.4 %
- mixture of glyceryl mono- and distearate 0.3 %
- L-cysteine 0.003 %.

17. Use of a food base as defined in any one of claims 1 to 16 as an ingredient in the preparation of liquid fritter dough.

18. Use according to claim 17, **characterised in that** in said fritter dough the food base accounts for 30 to 45 % by weight.

19. Liquid fritter dough, **characterised in that** it contains, by weight relative to the total weight of said dough:
- from 30 to 45 % of a food base as defined in any one of claims 1 to 16,
- from 12 to 20 % of water,
- whole eggs in a quantity of 11 to 19 %,
- at least one fat which is originally solid or semi-liquid at ambient temperature, in a quantity of 4 to 7 %,
- at least one vegetable oil that is liquid at ambient temperature, in a quantity of 4 to 7 %, and optionally
- one or more markers and/or inclusions.

20. Fritter dough according to claim 19, **characterised in that** the food base accounts for 35 to 42 % by weight of the total weight of the fritter dough.

21. Fritter dough according to claim 19 or 20, **characterised in that** the fat or fats that are solid or semi-solid at ambient temperature are selected from margarines containing, amongst other ingredients such as emulsifying agents and water, a mixture of fatty substances of animal or vegetable origin, these fatty substances being selected from palm, palm kernel, copra, soya, sunflower and rapeseed oils.

22. Fritter dough according to any one of claims 19 to 21, **characterised in that** the vegetable oil or oils that are liquid at ambient temperature are selected from sunflower, rapeseed, palm and hemp seed oils.

23. Fritter dough according to any one of claims 19 to 22, **characterised in that** the marker or markers and inclusions are selected from pieces of ham, of stoned olives, of peppers, of cheeses, of fish and fish substitutes, of sea food, of lardoons, of pieces of poultry, fruits, dried fruits, candied fruits and chocolate chips.

24. Fritter dough according to any one of claims 19 to 23, **characterised in that** if they are used, the marker or markers and inclusions account for 15 to 30 % by weight relative to the total weight of the fritter dough.

25. Fritter dough according to any one of claims 19 to 24, **characterised in that** it is based on the following composition by weight, relative to the total weight of said fritter dough:
- food base as defined in any one of claims 1 to 16 36 %
- markers or inclusions 20 %
- water 17 %
- fresh eggs 15.5 %
- fats 5.5 %
- vegetable oil 5.5 %
- salt 0 to 2 %
- flavouring agent(s) 0 to 2 %.

26. Method of preparing a fritter dough as defined in any one of claims 19 to 25, **characterised in that** it comprises the following steps:
a) preparing a food base as defined in any one of claims 1 to 16; then
b) mixing, accompanied by agitation and at a temperature of between 10 and 12°C, said food base with water, at least one vegetable oil that is liquid at ambient temperature, at least one fat that is solid or semi-solid at ambient temperature, eggs and optionally flavouring agents.

27. Method according to claim 26, **characterised in that** the fritter dough contains one or more markers or inclusions, in which case said method then comprises a supplementary step c) of adding the markers or inclusions, accompanied by moderate agitation.

28. Method of preparing a fritter, **characterised in that** it comprises the following steps:
- dividing the fritter dough as defined in any one of claims 19 to 25 into individual portions with a weight of between 3 and 20 g,
- cooking each of said portions in an oil bath raised to a temperature of between 160 and 200°C for a period of between 2 and 4 minutes, and
- draining the fritters thus obtained.

29. Cooked fritter, **characterised in that** it is obtained using the method as defined in claim 27 or 28.

## Patentansprüche

1. Nahrungsmittelgrundlage, **dadurch gekennzeichnet , dass** sie als Gewicht, bezogen auf das Gesamtgewicht der Nahrungsmittelgrundlage, enthält:
- 20 bis 50% eines Mehls, das Gluten umfasst, oder eines Mehls, ausgewählt aus Kastanienmehl und Buchweizenmehl,
- 15 bis 45 % Stärke,
- 5 bis 15% Kartoffelstärke,
- 2 bis 10% Zucker,
- 0,1 bis 5% Quarkpulver,
- 1 bis 10% entrahmtes Jogurtpulver
- 0,2 bis 7% wenigstens eines Verdickungsmittels,
- 0,5 bis 5% Triebmittelpulver,
- 0,3 bis 10% wenigstens eines Emulgators,
- 0,1 bis 3% Eiweißpulver,
- 0,5 bis 3% Salz und
- 0,001 bis 1% eines Gluten-Konditionierungsmittels.

2. Nahrungsmittelgrundlage nach Anspruch 1, **dadurch gekennzeichnet, dass** das genannte Mehl ausgewählt ist unter Weizen-, Roggen-, Dinkel-, Kastanien-, Hafer-, Gerste-, Buchweizenmehl und Vollkornmehl.

3. Nahrungsmittelgrundlage nach Anspruch 1 oder 2,
**dadurch gekennzeichnet , dass** das genannte Mehl 38 bis 42 Gew.-%, bezogen auf das Gesamtgewicht der Nahrungsmittelgrundlage, darstellt.

4. Nahrungsmittelgrundlage nach einem der vorangehenden Ansprüche, **dadurch gekennzeichnet , dass** die Stärke unter den nativen Stärken von Weizen und Mais ausgewählt ist.

5. Nahrungsmittelgrundlage nach einem der vorangehenden Ansprüche, **dadurch gekennzeichnet , dass** die Stärke 34 bis 38 Gew.-%, bezogen auf das Gesamtgewicht der Nahrungsmittelgrundlage, darstellt.

6. Nahrungsmittelgrundlage nach einem der vorangehenden Ansprüche, **dadurch gekennzeichnet , dass** die Kartoffelstärke 6 bis 10 Gew.-%, bezogen auf das Gesamtgewicht der Nahrungsmittelgrundlage, darstellt.

7. Nahrungsmittelgrundlage nach einem der vorangehenden Ansprüche, **dadurch gekennzeichnet, dass** der Zucker 3 bis 6 Gew.-%, bezogen auf das Gesamtgewicht der Nahrungsmittelgrundlage, darstellt.

8. Nahrungsmittelgrundlage nach einem der vorangehenden Ansprüche, **dadurch gekennzeichnet , dass** das Quarkpulver 1,5 bis 3,4 Gew.-% darstellt; das entrahmte Jogurtpulver 3,5 bis 6,5 Gew.-% darstellt und das Eiweißpulver 0,5 bis 2 Gew.-% darstellt, bezogen auf das Gesamtgewicht der Nahrungsmittelgrundlage.

9. Nahrungsmittelgrundlage nach einem der vorangehenden Ansprüche, **dadurch gekennzeichnet , dass** das Verdickungsmittel unter den Mehlen von Algen, wie Guarmehl und Agar-Agar-Mehl, Gelatinen, Pektinen und Cellulosen ausgewhält ist.

10. Nahrungsmittelgrundlage nach einem der vorangehenden Ansprüche, **dadurch gekennzeichnet, dass** das Verdickungsmittel 0,4 bis 2 Gew.-%, bezogen auf das Gesamtgewicht der Nahrungsmittelgrundlage, darstellt.

11. Nahrungsmittelgrundlage nach einem der vorangehenden Ansprüche, **dadurch gekennzeichnet , dass** das Triebmittelpulver ausgewählt ist unter den Triebmittelpulvern, die aus einem Gemisch von Natriumbicarbonat und Pyrophosphaten, wie zum Beispiel Natriumpyrophosphat, bestehen.

12. Nahrungsmittelgrundlage nach einem der vorangehenden Ansprüche, **dadurch gekennzeichnet , dass** das Triebmittelpulver 1 bis 2,5 Gew.-%, bezogen auf das Gesamtgewicht der Nahrungsmittelgrundlage, darstellt.

13. Nahrungsmittelgrundlage nach einem der vorangehenden Ansprüche, **dadurch gekennzeichnet, dass** der Emulgator oder die Emulgatoren ausgewählt ist/sind aus Alginsäure und ihren Derivaten, Carrageenaten, Mehlen von Pflanzenkörnen, wie zum Beispiel den Körnern des Johannisbrotbaums, von Tamarin, Polyphosphaten wie Natrium- oder Kaliumphosphaten, den alimentären Mono- und Diglyceriden von Fettsäuren und den Essigsäure-, Milchsäure-, Citronensäure-, Weinsäure-und Diacetylweinsäureestern von alimentären Mono- und Diglyceriden von Fettsäuren sowie ihren Natrium-, Kalium-oder Calciumsalzen und ihren Gemischen.

14. Nahrungsmittelgrundlage nach einem der vorangehenden Ansprüche, **dadurch gekennzeichnet , dass** der Emulgator oder die Emulgatoren 0,5 bis 1,5 Gew.-%, bezogen auf das Gesamtgewicht der Nahrungsmittelgrundlage, darstellt/darstellen.

15. Nahrungsmittelgrundlage nach einem der vorangehenden Ansprüche, **dadurch gekennzeichnet , dass** die Gluten-Konditionierungsmittel ausgewählt sind aus L-Cystein, deaktivierter Hefe und den reduzierenden Enzymen, wie zum Beispiel komplexen Proteasegemischen.

16. Nahrungsmittelgrundlage nach einem der vorangehenden Ansprüche, **dadurch gekennzeichnet, dass** sie die folgende Zusammensetzung hat (als Gewicht, bezogen auf das Gesamtgewicht der Nahrungsmittelgrundlage):
- Weizenmehl 40,5 %
- native Weizenstärke 36 %
- Kartoffelstärke 8 %
- entrahmtes Jogurtpulver 5 %
- Puderzucker 4 %
- Quarkpulver 2 %
- wasserfreies feines Salz 1 %
- Eiweißpulver 0,9 %
- Natriumpyrophosphat 0,8 %
- Natriumbicarbonat 0,6 %
- Guarmehl 0,5 %
- Glyceridester von Fettsäuren und Mono- und Diacetylweinsäure 0,4 %
- Gemisch aus Glycerylmono- und -distearat 0,3 %
- L-Cystein 0,003%

17. Verwendung einer Nahrungsmittelgrundlage, wie sie in einem der Ansprüche 1 bis 16 definiert ist, als Ingredienz für die Herstellung eines flüssigen Teigs für Beignets.

18. Verwendung nach Anspruch 17, **dadurch gekennzeichnet, dass** die genannte Nahrungsmittelgrundlage in dem genannten Teig für Beignets 30 bis 45 Gew.-% ausmacht.

19. Flüssiger Teig für Beignets, **dadurch gekennzeichnet, dass** er als Gewicht, bezogen auf das Gesamtgewicht des Teigs, umfasst:
- 30 bis 45% einer Nahrungsmittelgrundlage, wie sie in einem der Ansprüche 1 bis 16 definiert ist,
- 12 bis 20% Wasser,
- ganze Eier, mit 11 bis 19%,
- wenigstens ein Fett, das bei Umgebungstemperatur fest oder halbflüssig ist, mit 4 bis 7%,
- wenigstens ein Pflanzenöl, das bei Umgebungstemperatur flüssig ist, mit 4 bis 7%, und gegebenenfalls
- ein markantes Mittel oder mehrere markante Mittel und/oder Einschlüsse.

20. Teig für Beignets nach Anspruch 19, **dadurch gekennzeichnet, dass** die Nahrungsmittelgrundlage 35 bis 42 Gew.-% des Gesamtgewichts des Teigs für Beignets darstellt.

21. Teig für Beignets nach Anspruch 19 oder 20, **dadurch gekennzeichnet, dass** das bei Umgebungstemperatur feste oder halbfeste Fett oder die bei Umgebungstemperatur festen oder halbfesten Fette ausgewählt ist/sind aus Margarinen, bestehend aus, neben anderen Ingredienzien wie Emulgatoren und Wasser, einem Gemisch aus Fettkörpern tierischer oder pflanzlicher Herkunft, wobei diese Fettkörper unter Palm-, Palmkernöl, Kopraöl, Sojaöl, Sonnenblumenöl und Rapsöl ausgewählt sind.

22. Teig für Beignets nach einem der Ansprüche 19 bis 21, **dadurch gekennzeichnet, dass** das bei Umgebungstemperatur flüssige Pflanzenöl oder die bei Umgebungstemperatur flüssigen Pflanzenöle aus Sonnenblumenöl, Rapsöl, Palmöl und Hanföl ausgewählt ist/sind.

23. Teig für Beignets nach einem der Ansprüche 19 bis 22, **dadurch gekennzeichnet, dass** das markante Mittel oder die markanten Mittel und die Einschlüsse ausgewählt sind unter Stücken von Schinken, entkernten Oliven, Paprika, Käse, Fischen und Fischersatzmitteln, Meeresfrüchten, Speck, Stücken von Geflügel, Früchten, Trockenfrüchten, kandierten Früchten und Schokoladengranalien.

24. Teig für Beignets nach einem der Ansprüche 19 bis 23,
**dadurch gekennzeichnet , dass**, wenn das markante Mittel oder die markanten Mittel oder der Einschluss oder die Einschlüsse verwendet werden, sie 15 bis 30 Gew.-%, bezogen auf das Gesamtgewicht des Teigs für Beignets, darstellen.

25. Teig für Beignets nach einem der Ansprüche 19 bis 24,
**dadurch gekennzeichnet, dass** er die folgende Zusammensetzung hat, ausgedrückt als Gewicht, bezogen auf das Gesamtgewicht des genannten Teigs für Beignets:
- Nahrungsmittelgrundlage, wie sie in einem der Ansprüche 1 bis 16 definiert ist 36 %
- markante Mittel oder Einschlüsse 20 %
- Wasser 17 %
- frische Eier 15,5 %
- Fette 5,5 %
- Pflanzenöl 5,5 %
- Salz 0 bis 2 %
- Aromatisiermittel 0 bis 2 %

26. Verfahren zur Herstellung eines Teigs für Beignets, wie er in einem der Ansprüche 19 bis 25 definiert ist, **dadurch gekennzeichnet, dass** es die folgenden Stufen umfasst:
a) die Herstellung einer Nahrungsmittelgrundlage, wie sie in einem der Ansprüche 1 bis 16 definiert ist; dann
b) das Mischen der genannten Nahrungsmittelgrundlage mit Wasser, wenigstens einem Pflanzenöl, das bei Umgebungs temperatur flüssig ist, wenigstens einem bei Umgebungs temperatur festen oder halbfesten Fett, von Eiern und gegebenenfalls Aromatisiermitteln unter Rühren und bei einer Temperatur zwischen 10 und 12°C.

27. Verfahren nach Anspruch 26, **dadurch gekennzeichnet, dass** der Teig für Beignets ein markantes Mittel oder mehrere markante Mittel oder einen Einschluss oder mehrere Einschlüsse umfasst und dass das Verfahren dann eine zusätzliche Stufe c) des Zusetzens der markanten Mittel oder Einschlüsse unter moderater Bewegung umfasst.

28. Verfahren zur Herstellung eines Beignets, **dadurch gekennzeichnet, dass** es die folgenden Stufen umfasst:
- Aufteilen des Teigs für Beignets, wie er in einem der Ansprüche 19 bis 25 definiert ist, in einzelne Portionen mit einem Gewicht zwischen 3 und 20 g,
- Braten/Backen jeder der genannten Portionen in einem Öl-bad, dass auf eine Temperatur zwischen 160 und 200°C gebracht wurde, während einer Dauer zwischen 2 und 4 Minuten und
- Abtropfenlassen der so erhaltenen Beignets.

29. Gebackenes/Gebratenes Beignet, **dadurch gekennzeichnet, dass** es erhalten werden kann, indem das Verfahren, wie es in Anspruch 27 oder 28 definiert ist, durchgeführt wird.
